(19) Europäisches Patentamt
European Patent Office
Office européen des brevets

(11) Veröffentlichungsnummer: **0 472 091 B1**

# (12) EUROPÄISCHE PATENTSCHRIFT

(45) Veröffentlichungstag der Patentschrift: **23.11.94**

(51) Int. Cl.$^{5}$: **A01N 43/50**, //(A01N43/50, 33:12)

(21) Anmeldenummer: **91113554.9**

(22) Anmeldetag: **13.08.91**

## (54) Synergistische Mittel zur Regulierung des Pflanzenwachstums.

(30) Priorität: **22.08.90 DE 4026530**

(43) Veröffentlichungstag der Anmeldung:
**26.02.92 Patentblatt 92/09**

(45) Bekanntmachung des Hinweises auf die Patenterteilung:
**23.11.94 Patentblatt 94/47**

(84) Benannte Vertragsstaaten:
**CH DE DK ES FR GB GR IT LI NL**

(56) Entgegenhaltungen:
**EP-A- 0 149 083**
**EP-A- 0 190 666**
**DE-A- 2 207 575**
**FR-A- 2 172 418**

(73) Patentinhaber: **BASF Aktiengesellschaft**
**Carl-Bosch-Strasse 38**
**D-67063 Ludwigshafen (DE)**

(72) Erfinder: **Schott, Eberhard Peter, Dr.**
**Olbergstrasse 27**
**W-6730 Neustadt (DE)**
Erfinder: **Rademacher, Wilhelm, Dr.**
**Austrasse 1**
**W-6703 Limburgerhof (DE)**

**EP 0 472 091 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mittel zur Regulierung des Pflanzenwachstums, enthaltend eine synergistische Mischung aus mindestens einem wachstumsregulatorisch wirksamen quarternären Ammoniumsalz aus der Gruppe der Verbindungen I, umfassend: N,N-Dimethyl-azacycloheptaniumsalze, N,N-Dimethyl-piperidiniumsalze, N,N-Dimethyl-tetrahydropyridaziniumsalze, N-Methyl-pyridiniumsalze und N,N-Dimethyl-pyrrolidiniumsalze und einem Imidazolinylderivat der allgemeinen Formel II

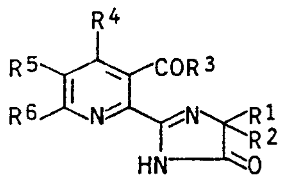

II

in der die Substituenten folgende Bedeutung haben:

$R^1$

$C_1$-$C_4$-Alkyl;

$R^2$

$C_1$-$C_4$-Alkyl oder $C_3$-$C_6$-Cycloalkyl;

$R^3$

Wasserstoff; Hydroxyl; $C_1$-$C_{12}$-Alkyl; $C_1$-$C_{12}$-Alkoxy; $C_1$-$C_{12}$-Alkylamino; Di-$C_1$-$C_{12}$-alkylamino;

Phenyl, Phenoxy oder Phenylamino, wobei die aromatischen Reste ein bis fünf Halogenatome und/oder ein bis drei der folgenden Gruppen tragen können: $C_1$-$C_4$-Aklyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

$R^4$

Wasserstoff; Halogen; $C_1$-$C_4$-Alkyl; $C_1$-$C_4$-Halogenalkyl; $C_1$-$C_4$-Alkoxy;

$C_1$-$C_4$-Halogenalkoxy; $C_1$-$C_4$-Alkylthio oder $C_1$-$C_4$-Halogenalkylthio;

$R^5$ und $R^6$ unabhängig voneinander

eine der bei $R^4$ genannten Gruppen oder gemeinsam eine 1,3-Butadien-1,4-diylgruppe, welche ein bis vier Halogenatome

und/oder ein bis drei der folgenden Gruppen tragen kann: $C_1$-$C_4$-Aklyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

sowie inerte Zusatzstoffe.

Des weiteren betrifft die Erfindung Verfahren zu Regulierung des Pflanzenwachstums mit diesen Mitteln.

Quartäre Ammoniumverbindungen sind aus der Literatur als Pflanzenwachstumsregulatoren bekannt (DE-A 22 07 575). Außerdem werden in der Literatur Imidazolderivate als Herbizide beschrieben (DE-A 31 21 736). Weiterhin sind Mischungen aus N,N,N-Trimethyl-N-2-chlorethylammoniumsalzen und 2-(4-Isopropyl-4-methyl-5-oxo-2-imidazolin-2-yl)-3-chinolin-carbonsäure mit wachstumsregulierenden Eigenschaften bekannt (EP-A 149 083).

Aufgabe der vorliegenden Erfindung waren neue wirksame synergistische Mischungen zur Regulierung des Pflanzenwachstums.

Demgemäß wurden die eingangs definierten synergistischen Mischungen gefunden. Außerdem wurden Verfahren zur Verwendung dieser Mischungen als Pflanzenwachstumsregulatoren gefunden.

Im Hinblick auf die bestimmungsgemäße Verwendung in den erfindungsgemäßen synergistischen wachstumsregulierenden Mittel kommen als Substituenten der Verbindungen II folgende Reste in Betracht:

$R^1$

C1-C4-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl und 1-Methylethyl, insbesondere Methyl und 1-Methylethyl;

$R^2$

$C_1$-$C_4$-Alkyl wie Methyl, Ethyl, Propyl, 1-Methylethyl, Butyl, 1-Methylpropyl, 2-Methylpropyl und 1,1-Dimethylethyl, vorzugsweise Methyl und Ethyl, insbesondere Methyl;

oder $C_3$-$C_6$-Cycloalkyl wie Cyclopropyl, Cyclobutyl, Cyclopentyl und Cyclohexyl, vorzugsweise Cyclopropyl und Cyclopentyl, insbesondere Cyclopropyl;

$R^3$

Wasserstoff;

$C_1$-$C_{12}$-Alkyl, vorzugsweise verzweigtes oder unverzweigtes $C_1$-$C_6$-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, insbesondere verzweigtes oder unverzweigtes $C_1$-$C_4$-Alkyl wie Methyl, Ethyl, Propyl, 1-Methylethyl, Butyl, 1-Methyl-propyl, 2-Methylpropyl und 1,1-Dimethylethyl;

$C_1$-$C_{12}$-Alkoxy, vorzugsweise verzweigtes oder unverzweigtes $C_1$-$C_6$-Alkoxy wie Methoxy, Ethoxy, Propyloxy, 1-Methylethoxy, Butyloxy, 1-Methylpropyloxy, 2-Methylpropyloxy, 1,1-Dimethylethyloxy, Pentyloxy, 1-Methylbutyloxy, 2-Methylbutyloxy, 3-Methylbutyloxy, 2,2-Dimethylpropyloxy, 1-Ethylpropyloxy, Hexyloxy, 1,1-Dimethylpropyloxy, 1,2-Dimethylpropyloxy, 1-Methylpentyloxy, 2-Methylpentyloxy, 3-Methylpentyloxy, 4-Methylpentyloxy, 1,1-Dimethylbutyloxy, 1,2-Dimethylbutyloxy, 1,3-Dimethylbutyloxy, 2,2-Dimethylbutyloxy, 2,3-Dimethylbutyloxy, 3,3-Dimethylbutyloxy, 1-Ethylbutyloxy, 2-Ethylbutyloxy, 1,1,2-Trimethylpropyloxy, 1,2,2-Trimethylpropyloxy, 1-Ethyl-1-methylpropyloxy und 1-Ethyl-2-methylpropyloxy, insbesondere verzweigtes oder unverzweigtes $C_1$-$C_4$-Alkoxy wie Methoxy, Ethoxy, Propyloxy, 1-Methylethoxy, Butyloxy, 1-Methyl-propyloxy, 2-Methylpropyloxy und 1,1-Dimethylethyloxy;

$C_1$-$C_{12}$-Alkylamino, besonders $C_1$-$C_6$-Alkylamino wie Methylamino, Ethylamino, Propylamino, 1-Methylethylamino, Butylamino, 1-Methylpropylamino, 2-Methylpropylamino, 1,1-Dimethylethylamino, Pentylamino, 1-Methylbutylamino, 2-Methylbutylamino, 3-Methylbutylamino, 2,2-Dimethylpropylamino, 1-Ethylpropylamino, Hexylamino, 1,1-Dimethylpropylamino, 1,2-Dimethylpropylamino, 1-Methylpentylamino, 2-Methylpentylamino, 3-Methylpentylamino, 4-Methylpentylamino, 1,1-Dimethylbutylamino, 1,2-Dimethylbutylamino, 1,3-Dimethylbutylamino, 2,2-Dimethylbutylamino, 2,3-Dimethylbutylamino, 3,3-Dimethylbutylamino, 1-Ethylbutylamino, 2-Ethylbutylamino, 1,1,2-Trimethylpropylamino, 1,2,2-Trimethylpropylamino, 1-Ethyl-1-methylpropylamino und 1-Ethyl-2-methylpropylamino;

Di-$C_1$-$C_{12}$-alkylamino, besonders Di-$C_1$-$C_6$-alkylamino, vorzugsweise Di-$C_1$-$C_4$-alkylamino wie N,N-Dimethylamino, N,N-Diethylamino, N,N-Dipropylamino, N,N-Di-(1-methylethyl)amino, N,N-Dibutylamino, N,N-Di-(1-methylpropyl)-amino, N,N-Di-(2-methylpropyl)amino, N,N-Di-(1,1-dimethylethyl)amino, N-Ethyl-N-methylamino, N-Methyl-N-propylamino, N-Methyl-N-(1-methylethyl)-amino, N-Butyl-N-methylamino, N-Methyl-N-(1-methylpropyl)amino, N-MethylN-(2-methylpropyl )amino, N-(1,1-Dimethylethyl)-N-methylamino, N-Ethyl-N-propylamino, N-Ethyl-N-(1-methyl-ethyl)amino, N-Butyl-N-ethylamino, N-Ethyl-N-(1-methyl-propyl)amino, N-Ethyl-N-(2-methylpropyl)amino, N-Ethyl-N-(1,1-dimethylethyl)amino, N-(1-Methylethyl)-N-propylamino, N-Butyl-N-propylamino, N-(1-Methylpropyl)-N-propylamino, N-(2-Methylpropyl)-N-propylamino, N-(1,1-Dimethylethyl)-N-propylamino, N-Butyl-N-(1-methylethyl)amino, N-(1-Methylethyl)-N-(1-methylpropyl)amino, N-(1-Methylethyl)-N-(2-methylpropyl)amino, N-(1,1-Di-methylethyl)-N-(1-methylethyl)amino, N-Butyl-N-(1-methylpropyl)amino, N-Butyl-N-(2-methylpropyl)amino, N-Butyl-N-(1,1-dimethylethyl)amino, N-(1-Methylpropyl)-N-(2-methylpropyl)amino, N-(1,1-Dimethylethyl)-N-(1-methylpropyl)amino und N-(1,1-Dimethylethyl)-N-(2-methylpropyl)amino;

Phenyl, Phenoxy oder Phenylamino, wobei die aromatischen Reste ein bis fünf Halogenatome wie Fluor, Chlor, Brom und Jod, vorzugsweise Fluor, Chlor und Brom, insbesondere Fluor und Chlor; und/oder ein bis drei der folgenden Gruppen tragen können:

$C_1$-$C_4$-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl und 1-Methylethyl, insbesondere Methyl;

$C_1$-$C_4$-Halogenalkyl, besonders $C_1$-$C_2$-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, vorzugsweise Difluormethyl und Trifluormethyl, insbesondere Trifluormethyl;

$C_1$-$C_4$-Alkoxy wie Methoxy, Ethoxy, Propyloxy, 1-Methylethoxy, Butyloxy, 1-Methylpropyloxy, 2-Methylpropyloxy und 1,1-Dimethylethoxy, vorzugsweise Methoxy, Ethoxy, 1-Methylethoxy und 1,1-Dimethylethoxy, insbesondere Methoxy und 1-Methylethoxy;

$C_1$-$C_4$-Halogenalkoxy, besonders $C_1$-$C_2$-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, vorzugsweise Difluormethoxy und Trifluormethoxy;

$C_1$-$C_4$-Alkylthio wie Methylthio, Ethylthio, Propylthio, 1-Methylethylthio, Butylthio, 1-Methylpropylthio, 2-Methylpropylthio und 1,1-Dimethylethylthio, vorzugsweise Methylthio;

oder $C_1$-$C_4$-Halogenalkylthio, besonders $C_1$-$C_2$-Halogenalkylthio wie Chlormethylthio, Dichlormethylthio,

Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, vorzugsweise Difluormethylthio;

$R^4$

Wasserstoff;

Halogen wie Fluor, Chlor, Brom und Jod, vorzugsweise Fluor, Chlor und Brom, insbesondere Fluor und Chlor;

$C_1$-$C_4$-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl, 1-Methylethyl und 1,1-Dimethylethyl;

$C_1$-$C_4$-Halogenalkyl, besonders $C_1$-$C_2$-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, vorzugsweise Difluormethyl und Trifluormethyl;

$C_1$-$C_4$-Alkoxy wie Methoxy, Ethoxy, Propyloxy, 1-Methylethoxy, Butyloxy, 1-Methylpropyloxy, 2-Methylpropyloxy und 1,1-Dimethylethoxy, vorzugsweise Methoxy, Ethoxy, 1-Methylethoxy und 1,1-Dimethylethoxy, insbesondere Methoxy und 1,1-Dimethylethoxy;

$C_1$-$C_4$-Halogenalkoxy, besonders $C_1$-$C_2$-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, vorzugsweise Difluormethoxy und Trifluormethoxy;

$C_1$-$C_4$-Alkylthio wie Methylthio, Ethylthio, Propylthio, 1-Methylethylthio, Butylthio, 1-Methylpropylthio, 2-Methylpropylthio und 1,1-Dimethylethylthio, vorzugsweise Methylthio und Ethylthio;

oder $C_1$-$C_4$-Halogenalkylthio, besonders $C_1$-$C_2$-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, vorzugsweise Difluormethylthio;

$R^5$ und $R^6$ unabhängig voneinander

eine der im allgemeinen und in besonderen bei $R^4$ genannten Gruppen oder gemeinsam eine 1,3-Butadien-1,4-diylgruppe, welche ein bis vier Halogenatome wie Fluor, Chlor, Brom und Jod, vorzugsweise Fluor, Chlor und Brom, insbesondere Fluor und Chlor;

und/oder ein bis drei der folgenden Gruppen tragen kann:

$C_1$-$C_4$-Alkyl wie Methyl, Ethyl, Propyl, 1-Methylethyl, Butyl, 1-Methylpropyl, 2-Methylpropyl und 1,1-Dimethylethyl, vorzugsweise Methyl, Ethyl und 1-Methylethyl;

$C_1$-$C_4$-Halogenalkyl, besonders $C_1$-$C_2$-Halogenalkyl wie Chlormethyl, Dichlormethyl, Trichlormethyl, Fluormethyl, Difluormethyl, Trifluormethyl, Chlorfluormethyl, Dichlorfluormethyl, Chlordifluormethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl, vorzugsweise Difluormethyl und Trifluormethyl;

$C_1$-$C_4$-Alkoxy wie Methoxy, Ethoxy, Propyloxy, 1-Methylethoxy, Butyloxy, 1-Methylpropyloxy, 2-Methylpropyloxy und 1,1-Dimethylethoxy, vorzugsweise Methoxy, Ethoxy, 1-Methylethoxy und 1,1-Dimethylethoxy;

$C_1$-$C_4$-Halogenalkoxy, besonders $C_1$-$C_2$-Halogenalkoxy wie Chlormethyloxy, Dichlormethyloxy, Trichlormethyloxy, Fluormethyloxy, Difluormethyloxy, Trifluormethyloxy, Chlorfluormethyloxy, Dichlorfluormethyloxy, Chlordifluormethyloxy, 1-Fluorethyloxy, 2-Fluorethyloxy, 2,2-Difluorethyloxy, 2,2,2-Trifluorethyloxy, 2-Chlor-2-fluorethyloxy, 2-Chlor-2,2-difluorethyloxy, 2,2-Dichlor-2-fluorethyloxy, 2,2,2-Trichlorethyloxy und Pentafluorethyloxy, vorzugsweise Difluormethoxy und Trifluormethoxy;

$C_1$-$C_4$-Alkylthio wie Methylthio, Ethylthio, Propylthio, 1-Methylethylthio, Butylthio, 1-Methylpropylthio, 2-Methylpropylthio und 1,1-Dimethylethylthio, vorzugsweise Methylthio und Ethylthio;

oder $C_1$-$C_4$-Halogenalkylthio, besonders $C_1$-$C_2$-Halogenalkylthio wie Chlormethylthio, Dichlormethylthio, Trichlormethylthio, Fluormethylthio, Difluormethylthio, Trifluormethylthio, Chlorfluormethylthio, Dichlorfluormethylthio, Chlordifluormethylthio, 1-Fluorethylthio, 2-Fluorethylthio, 2,2-Difluorethylthio, 2,2,2-Trifluorethylthio, 2-Chlor-2-fluorethylthio, 2-Chlor-2,2-difluorethylthio, 2,2-Dichlor-2-fluorethylthio, 2,2,2-Trichlorethylthio und Pentafluorethylthio, vorzugsweise Difluormethylthio.

Im Hinblick auf die bestimmungsgemäße Verwendung in den synergistischen Mitteln sind insbesondere solche Verbindungen II bevorzugt, in denen die Substituenten folgende Bedeutung haben:

$R^1$

$C_1$-$C_4$-Alkyl wie vorstehend genannt, insbesondere Methyl;

$R^2$
$C_1$-$C_4$-Alkyl wie vorstehend genannt, insbesondere Methyl und 1-Methylethyl;
oder $C_3$-$C_6$-Cycloalkyl wie vorstehend genannt, insbesondere Cyclopropyl;
$R^3$
Wasserstoff; Hydroxyl;
$C_1$-$C_8$-Alkyl wie vorstehend genannt, insbesondere verzweigtes oder unverzweigtes $C_1$-$C_6$-Alkyl wie vorstehend genannt;
$C_1$-$C_8$-Alkoxy wie vorstehend genannt, insbesondere verzweigtes oder unverzweigtes $C_1$-$C_6$-Alkoxy wie vorstehend genannt;
$C_1$-$C_8$-Alkylamino wie vorstehend genannt, insbesondere $C_1$-$C_6$-Alkylamino wie vorstehend genannt;
Di-$C_1$-$C_8$-alkylamino wie vorstehend genannt, insbesondere Di-$C_1$-$C_4$-alkylamino wie vorstehend genannt;
Phenyl, Phenoxy oder Phenylamino, wobei die aromatischen Reste ein bis fünf Halogenatome wie vorstehend genannt, insbesondere Fluor und Chlor,
und/oder ein bis drei der folgenden Gruppen tragen können:
$C_1$-$C_4$-Aklyl wie vorstehend genannt, insbesondere Methyl;
$C_1$-$C_4$-Halogenalkyl wie vorstehend genannt, insbesondere Difluormethyl und Trifluormethyl;
$C_1$-$C_4$-Alkoxy wie vorstehend genannt, insbesondere Methoxy, Ethoxy, 1-Methylethoxy und 1,1-Dimethylethoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio und Ethylthio;
und $C_1$-$C_4$-Halogenalkylthio wie vorstehend genannt, insbesondere Difluormethylthio;
$R^4$
Wasserstoff;
Halogen wie vorstehend genannt, insbesondere Fluor und Chlor;
$C_1$-$C_4$-Alkyl wie vorstehend genannt, insbesondere Methyl und 1,1-Dimethylethyl;
$C_1$-$C_4$-Halogenalkyl wie vorstehend genannt, insbesondere Difluormethyl und Trifluormethyl;
$C_1$-$C_4$-Alkoxy wie vorstehend genannt, insbesondere Methoxy und 1,1-Dimethylethoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio und Ethylthio;
oder $C_1$-$C_4$-Halogenalkylthio wie vorstehend genannt, insbesondere Difluormethylthio;
$R^5$ und $R^6$ unabhängig voneinander
eine der im allgemeinen und im besonderen bei $R^4$ genannten Gruppen oder gemeinsam eine 1,3-Butadien-1,4-diylgruppe, welche ein bis vier Halogenatome wie vorstehend genannt, insbesondere Fluor und Chlor;
und/oder ein bis drei der folgenden Gruppen tragen kann:
$C_1$-$C_4$-Alkyl wie vorstehend genannt, insbesondere Methyl;
$C_1$-$C_4$-Halogenalkyl wie vorstehend genannt, insbesondere Trifluormethyl;
$C_1$-$C_4$-Alkoxy wie vorstehend genannt, insbesondere Methoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio;
und $C_1$-$C_4$-Halogenalkylthio wie vorstehend genannt, insbesondere Difluormethylthio.

Besonders bevorzugt sind synergistische Mittel zur Regulierung des Pflanzenwachstums die als wachstumsregulatorisch wirksames quarternäres Ammoniumsalz N,N-Dimethyl-piperidiniumsalze
enthalten.

Von diesen synergistischen Mitteln sind insbesondere solche bevorzugt, in denen neben den N,N-Dimethyl-piperidiniumsalzen
ein Imidazolinylderivat der allgemeinen Formel II enthalten ist, in der die Substituenten folgende Bedeutung haben:
$R^1$
$C_1$-$C_4$-Alkyl wie vorstehend genannt, insbesondere Methyl;
$R^2$
$C_1$-$C_4$-Alkyl wie vorstehend genannt, insbesondere Methyl und 1-Methylethyl;
oder $C_3$-$C_6$-Cycloalkyl wie vorstehend genannt, insbesondere Cyclopropyl;
$R^3$
Wasserstoff; Hydroxyl;
$C_1$-$C_8$-Alkyl wie vorstehend genannt, insbesondere verzweigtes oder unverzweigtes $C_1$-$C_6$-Alkyl wie vorstehend genannt;
$C_1$-$C_8$-Alkoxy wie vorstehend genannt, insbesondere verzweigtes oder unverzweigtes $C_1$-$C_6$-Alkoxy wie

vorstehend genannt;
$C_1$-$C_8$-Alkylamino wie vorstehend genannt, insbesondere $C_1$-$C_6$-Alkylamino wie vorstehend genannt;
Di-$C_1$-$C_8$-alkylamino wie vorstehend genannt, insbesondere Di-$C_1$-$C_4$-alkylamino wie vorstehend genannt;
Phenyl, Phenoxy oder Phenylamino, wobei die aromatischen Reste ein bis fünf Halogenatome wie vorstehend genannt, insbesondere Fluor und Chlor;
und/oder ein bis drei der folgenden Gruppen tragen können:
$C_1$-$C_4$-Alkyl wie vorstehend genannt, insbesondere Methyl;
$C_1$-$C_4$-Halogenalkyl wie vorstehend genannt, insbesondere Difluormethyl und Trifluormethyl;
$C_1$-$C_4$-Alkoxy wie vorstehend genannt, insbesondere Methoxy und Ethoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio und Ethylthio;
und $C_1$-$C_4$-Halogenalkylthio wie vorstehend genannt, insbesondere Difluormethylthio;
$R^4$
Wasserstoff;
oder Halogen wie vorstehend genannt, insbesondere Fluor und Chlor;
$R^5$ und $R^6$ unabhängig voneinander
Wasserstoff;
Halogen wie vorstehend genannt, insbesondere Fluor und Chlor;
$C_1$-$C_4$-Alkyl wie vorstehend genannt, insbesondere Methyl;
$C_1$-$C_4$-Halogenalkyl wie vorstehend genannt, insbesondere Trifluormethyl;
$C_1$-$C_4$-Alkoxy wie vorstehend genannt, insbesondere Methoxy und 1,1-Dimethylethoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio;
und $C_1$-$C_4$-Halogenalkylthio wie vorstehend genannt, insbesondere Difluormethylthio;
oder gemeinsam eine 1,3-Butadien-1,4-diylgruppe, welche ein bis vier Halogenatome wie vorstehend genannt, insbesondere Fluor und Chlor;
und/oder eine der folgenden Gruppen tragen kann:
$C_1$-$C_4$-Aklyl wie vorstehend genannt, insbesondere Methyl;
$C_1$-$C_4$-Halogenalkyl wie vorstehend genannt, insbesondere Trifluormethyl;
$C_1$-$C_4$-Alkoxy wie vorstehend genannt, insbesondere Methoxy;
$C_1$-$C_4$-Halogenalkoxy wie vorstehend genannt, insbesondere Difluormethoxy und Trifluormethoxy;
$C_1$-$C_4$-Alkylthio wie vorstehend genannt, insbesondere Methylthio;
und $C_1$-$C_4$-Halogenalkylthio wie vorstehend genannt, insbesondere Difluormethylthio.

Die Wirkstoffe können gemeinsam oder getrennt, zur gleichen Zeit oder nacheinander, vor, während oder nach dem Auflaufen der Pflanzen ausgebracht werden.

In den synergistischen Mitteln beträgt das Anteilsverhältnis von Ammoniumsalz I zu Imidazolinderivat II 0, 1:1 bis 1000:1 Gew.-Teile, vorzugsweise 1:1 bis 950:1 Gew.-Teile und insbesondere 1,5:1 bis 920:1 Gew.-Teile.

Die erfindungsgemäßen Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Die Verbindungen I und II eignen sich allgemein zur Herstellung von direkt versprühbaren Lösungen, Emulsionen, Pasten oder Öldispersionen. Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Chlorbenzol, Isophoron oder stark polare Lösungsmittel wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.% der Wirkstoffe. Die Wirkstoffe werden dabei in einer Reinheit von 90 % bis 100 %, vorzugsweise 95 % bis 100 % (nach NMR-Spektrum) eingesetzt.

Die Applikation der wachstumsregulierenden Mittel bzw. der Wirkstoffe kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoffmischung betragen je nach Jahreszeit, Zielpflanzen und Wachstumsstadium 0,01 + 0,01 bis 2 + 0,001, vorzugsweise 0,03 + 0,02 bis 1 + 0,001 kg/ha aktive Substanz (a.S.).

Die synergistischen Mischungen können praktisch alle Entwicklungsstadien einer Pflanze verschiedenartig beeinflussen und werden deshalb als Wachstumsregulatoren eingesetzt. Die Wirkungsvielfalt der Pflanzenwachstumsregulatoren hängt ab vor allem

a) von der Pflanzenart und -sorte,

b) von dem Zeitpunkt der Applikation, bezogen auf das Entwicklungsstadium der Pflanze und von der Jahreszeit,

c) von dem Applikationsort und -verfahren (z.B. Samenbeize, Bodenbehandlung, Blattapplikation oder Stamminjektion bei Bäumen)

d) von klimatischen Faktoren, z.B. Temperatur, Niederschlagsmenge, außerdem auch Tageslänge und Lichtintensität

e) von der Bodenbeschaffenheit (einschließlich Düngung),

f) von der Formulierung bzw. Anwendungsform des Wirkstoffs und schließlich

g) von den angewendeten Konzentrationen der aktiven Substanz.

Aus der Reihe der verschiedenartigen Anwendungsmöglichkeiten der erfindungsgemäßen Mittel im Pflanzenanbau, in der Landwirtschaft und im Gartenbau, werden einige nachstehend erwähnt.

A. Mit den erfindungsgemäß verwendbaren Verbindungen läßt sich das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten.

Als vorteilhaft für die Praxis erweist sich eine verminderte Intensität des Wachstums von Gräsern an Straßenrändern, Hecken, Kanalböschungen und auf Rasenflächen wie Park-, Sport- und Obstanlagen, Zierrasen und Flugplätzen, so daß der Arbeits- und kostenaufwendige Rasenschnitt reduziert werden kann.

Von wirtschaftlichem Interesse ist auch die Erhöhung der Standfestigkeit von lageranfälligen Kulturen wie Getreide, Mais, Sonnenblumen und Soja. Die dabei verursachte Halmverkürzung und Halmverstärkung verringern oder beseitigen die Gefahr des "Lagerns" (des Umknickens) von Pflanzen unter ungünstigen Witterungsbedingungen vor der Ernte.

Wichtig ist auch die Anwendung von Wachstumsregulatoren zur Hemmung des Längenwachstums und zur zeitlichen Veränderung des Reifeverlaufs bei Baumwolle. Damit wird ein vollständig mechanisiertes Beernten dieser wichtigen Kulturpflanze ermöglicht.

Bei Obst- und anderen Bäumen lassen sich mit den Wachstumsregulatoren Schnittkosten einsparen. Außerdem kann die Alternanz von Obstbäumen durch Wachstumsregulatoren gebrochen werden.

Durch Anwendung von Wachstumsregulatoren kann auch die seitliche Verzweigung der Pflanzen vermehrt oder gehemmt werden. Daran besteht Interesse, wenn z.B. bei Tabakpflanzen die Ausbildung von Seitentrieben (Geiztrieben) zugunsten des Blattwachstums gehemmt werden soll.

Mit Wachstumsregulatoren läßt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generativen Phase neigen. Auch bei anderen Kulturen, z.B. Wintergetreide ist es vorteilhaft, wenn die Bestände durch Behandlung mit erfindungsgemäßen Verbindungen im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z.B. Pilzkrankheit) vorgebeugt werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

B. Mit den Wachstumsregulatoren lassen sich Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in Zuckerrüben, Zuckerrohr sowie Zitrusfrüchten zu erhöhen, den Proteingehalt in Getreide oder Soja zu steigern oder Gummibäume zum vermehrten Latexfluß zu stimulieren.

Dabei können die synergistischen Mittel Ertragssteigerungen durch Eingriffe in den pflanzlichen Stoffwechsel bzw. durch Förderung oder Hemmung des vegetativen und/oder des generativen Wachstums verursachen.

C. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.

Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrollierbares Entblättern von Nutzpflanzen wie beispielsweise Baumwolle wesentlich.

D. Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz der erfindungsgemäßen Substanzen läßt sich die Intensität der Bewässerung reduzieren und damit eine kostengünstigere Bewirtschaftung durchführen. Unter dem Einfluß von Wachstumsregulatoren kommt es zu einer besseren Ausnutzung des vorhandenen Wassers, weil u.a.

- die Öffnungsweite der Stomata reduziert wird
- eine dickere Epidermis und Cuticula ausgebildet werden
- die Durchwurzelung des Bodens verbessert wird und
- das Mikroklima im Kulturpflanzenbestand durch einen kompakteren Wuchs günstig beeinflußt wird.

Die erfindungsgemäßen synergistischen Mittel können den Kulturpflanzen sowohl vom Samen her (als Saatgutbeizmittel) als auch über den Boden, d.h. durch die Wurzel sowie - besonders bevorzugt - durch Spritzung über das Blatt zugeführt werden.

Infolge der hohen Pflanzenverträglichkeit kann die Aufwandmenge stark variiert werden.

In Anbetracht der Vielseitigkeit der Applikationsmethoden können die erfindungsgemäßen Mittel in Getreidekulturen und Baumwolle eingesetzt werden.

Der synergistische Effekt läßt sich gemäß der Formel von S. R. Colby (Weeds 15, 20-22 (1967))

$$E = X + Y - X \cdot Y / 100$$

ermitteln, wobei die Variablen folgende Bedeutung haben:

X Der meßbare Effekt des Wirkstoffs I bei einer Aufwandmenge [a]

Y Der meßbare Effekt des Wirkstoffs II bei einer Aufwandmenge [b]

E Der erwartete meßbare Effekt einer Mischung des Wirkstoffs I bei der Aufwandmenge [a] und des Wirkstoffs II bei der Aufwandmenge [b]

Aus der Differenz des Erwartungswerts E nach Colby und des Meßwerts ergibt sich, ob ein Synergismus (Verstärkung des Effekts bzw. Steigerung der Wirkung) oder ein Antagonismus (Abschwächung des Effekts bzw. Herabsetzung der Wirkung) vorliegt, bzw. sofern beide Werte übereinstimmen, daß lediglich additive Effekte bei der Wirkung zum tragen kommen.

Die verbesserte biologische Wirkung der Mischungen im Vergleich mit den Einzelsubstanzen bei Getreidekulturen und Baumwolle ließ sich im Feldversuch zeigen.

Untersucht wurden verschiedene Mischungen der folgenden Verbindungen:

A
N,N,N-Trimethyl-N-2-chlorethylammoniumchlorid (Chlormequat-chlorid)
B
N,N-Dimethylpiperidiniumchlorid (Mepiquat-chlorid)
C
2-(4-Isopropyl-4-methyl-5-oxo-2-imidazolin-2-yl)-3-chinolin-carbonsäure (Imazaquin)
D
2-(4-Isopropyl-4-methyl-5-oxo-2-imidazolin-2-yl)-3-nicotincarbonsäure-isopropylaminsalz (Imazapyr)
E
5-Ethyl-2-(4-isopropyl-4-methyl-5-oxo-2-imidazolin-2-yl)-3-nicotincarbonsäure (Imazethapyr)

Die Versuche wurden auf Parzellen von jeweils 12,5 qm (Getreide) bzw. 50 qm (Baumwolle) mit jeweils 4-facher Wiederholung durchgeführt. Anbau, Düngung und Verwendung von Pflanzenschutzmitteln gegen Verkrautung, Pilz-und Schadinsektenbefall geschah in standortüblicher Weise.

Die erfindungsgemäßen Mittel wurden im Nachauflaufverfahren aufgebracht (3.5 bar, 400 l/ha Wasser).

## Beispiel 1 bis 2

Anhand vorgenannter Getreideversuche wird nachgewiesen, daß die erfindungsgemäßen Mischungen der bekannten Mischung A + C (EP-A-149 083) deutlich überlegen sind. Der Tabelle 1 ist auch zu entnehmen, daß eine Mischung bestehend aus zwei verschiedenen quaternären Ammoniumverbindungen mit der Verbindung E die Wirkung der bekannten Kombination aus A + C übertrifft.

Tabelle 1

Kultur: Winterweizen (Sorte: Baroudeur)
Bodenart: toniger Sand
Saat: 02.10.89
Behandlung: 28.03.90
Auswertung: Pflanzenschäden 17.05.90
Wuchshöhe 05.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 108,0 | |
| A + E | 920 + 1 | 0 | 100,8 | - 7,2 |
| A + E | 920 + 2 | 0 | 99,2 | - 8,8 |
| A + E | 920 + 4 | 0 | 99,8 | - 8,2 |
| A + B + E | 690 + 230 + 2 | 0 | 100,5 | - 7,5 |
| A + C | 920 + 2 | 0 | 101,0 | - 7,0 |

Tabelle 2

Kultur: Winterweizen (Sorte: Kraka)
Bodenart: lehmiger Sand
Saat: 07.11.89
Behandlung: 02.04.90
Auswertung: Pflanzenschäden 06.06.90
Wuchshöhe 06.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 117,0 | |
| B | 690 | 0 | 107,0 | - 10,0 |
| C | 5 | 0 | 118,5 | + 1,5 |
| B + C | 690 + 2,5 | 0 | 106,1 | - 10,9 |
| A + C | 690 + 15 | 0 | 106,9 | - 10,1 |

Beispiel 3 bis 7

Mischungen bestehend aus den Verbindungen B + C führen bei Gerste, Weizen und Baumwolle zu synergistischen Wuchshemmungen. Die daraus resultierende verbesserte Standfestigkeit wird am Beispiel 5 verdeutlicht.

Tabelle 3

Kultur: Sommerweizen (Sorte: Ralle)
Bodenart: Ton
Saat: 20.03.89
Behandlung: 19.05.89
Auswertung: Pflanzenschäden 22.06.89
Wuchshöhe 13.06.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 80,6 | |
| B | 690 | 0 | 66,0 | - 14,6 |
| C | 10 | 0 | 81,0 | + 0,4 |
| B + C | 690 + 10 | 0 | 61,5 | - 19,1 |
| B + C | 690 + 20 | 7 | 49,8 | - 30,8 |

Tabelle 4

Kultur: Winterweizen (Sorte: Kraka)
Bodenart: lehmiger Sand
Saat: 07.11.89
Behandlung: 30.04.90
Auswertung: Pflanzenschäden 05.06.90
Wuchshöhe 05.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 95,1 | |
| B | 690 | 0 | 86,0 | - 9.1 |
| C | 5 | 0 | 95,4 | + 0,3 |
| B + C | 690 + 1,25 | 0 | 80,3 | - 14,8 |
| B + C | 690 + 2,5 | 0 | 84,0 | - 11,1 |
| B + C | 690 + 5,0 | 0 | 84,5 | - 10,6 |

Tabelle 5

Kultur: Sommergerste (Sorte: Gimpel)
Bodenart: Ton
Saat: 20.03.89
Behandlung: 18.05.89
Auswertung: Pflanzenschäden 02.06.89
Wuchshöhe 12.06.89
Lager 24.07.89

| Substanz | g/ha Wirkstoff | Pflanzenschäden % | Wuchshöhe/ Differenz zu Kontrolle [cm] | | Lager/ Differenz zu Kontrolle [cm] | |
|---|---|---|---|---|---|---|
| Kontrolle | 0 | 0 | 95,4 | | 38 | |
| B | 690 | 0 | 94,4 | - 1,0 | 49 | + 11 |
| C | 10 | 0 | 91,0 | - 4,4 | 40 | + 2 |
| B + C | 690 + 5 | 5 | 82,2 | - 13,2 | 0 | - 38 |
| B + C | 690 + 10 | 14 | 61,6 | - 33,8 | 0 | - 38 |
| B + C | 690 + 20 | 14 | 54,8 | - 40,6 | 0 | - 38 |

Tabelle 6

Kultur: Baumwolle (Sorte: SJ - 2)
Bodenart: sandiger Lehm
Saat: 24.02.89
Behandlung: 27.06.89
Auswertung: Pflanzenschäden 06.07.89
Wuchshöhe 05.10.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 125,0 | |
| B | 30 | 0 | 116,2 | - 8,8 |
| C | 10 | 0 | 126,2 | + 1,2 |
| B + C | 30 + 5 | 0 | 111,2 | - 13,8 |
| B + C | 30 + 10 | 0 | 110,5 | - 14,5 |
| B + C | 30 + 20 | 0 | 107,5 | - 17,5 |

Tabelle 7

Kultur: Baumwolle (Sorte: Stoneville 506)
Bodenart: sandiger Lehm
Saat: 26.05.89
Behandlung: 24.07.89
Auswertung: Pflanzenschäden 31.07.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 121,2 | |
| B | 60 | 0 | 111,0 | - 10,2 |
| C | 10 | 0 | 122,8 | + 1,6 |
| B + C | 60 + 5 | 0 | 112,5 | - 8,7 |
| B + C | 60 + 10 | 0 | 109,8 | - 11,4 |
| B + C | 60 + 20 | 0 | 107,5 | - 13,7 |

Beispiel 8 bis 10

Auch Mischungen der Substanzen B + D führen bei Gerste, Weizen und Baumwolle zu einer verkürzten Pflanzenhöhe und Mehrerträgen.

Tabelle 8

Kultur: Sommerweizen (Sorte: Ralle)
Bodenart: lehmiger Sand
Saat: 15.08.89
Behandlung: 15.08.89
Auswertung: Pflanzenschäden 02.06.89
Wuchshöhe 03.08.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 38,0 | |
| B | 690 | 0 | 40,5 | + 2,5 |
| D | 10 | 0 | 38,4 | + 0,4 |
| B + D | 690 + 5 | 0 | 44,6 | + 6,6 |
| B + D | 690 + 10 | 0 | 40,1 | + 2,1 |
| B + D | 690 + 20 | 5 | 31,0 | - 7,0 |

Tabelle 9

Kultur: Sommergerste (Sorte: Gimpel)
Bodenart: Ton
Saat: 20.03.89
Behandlung: 18.05.89
Auswertung: Pflanzenschäden 02.06.89
Wuchshöhe 12.06.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 95,4 | |
| B | 690 | 0 | 94,4 | - 1,0 |
| D | 10 | 5 | 51,8 | - 43,6 |
| B + D | 690 + 10 | 0 | 43,9 | - 51,5 |
| B + D | 690 + 20 | 6 | 43,5 | - 51,9 |

Tabelle 10

Kultur: Baumwolle (Sorte: GC - 510)
Bodenart: Lehm
Saat: 28.02.89
Behandlung: 27.06.89
Auswertung: Pflanzenschäden 06.07.89
Wuchshöhe 26.07.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 96,6 | |
| B | 30 | 0 | 88,7 | - 7,9 |
| D | 10 | 6 | 96,6 | 0 |
| B + D | 30 + 5 | 3 | 84,1 | - 12,5 |
| B + D | 30 + 10 | 6 | 83,4 | - 13,2 |
| B + D | 30 + 20 | 8 | 80,8 | - 15,8 |

Beispiel 11 bis 17

Bei Gerste, Hafer, Weizen und Baumwolle konnte ebenfalls durch Mischungen der Substanzen B + E die Wuchshöhe verkürzt, das Lager verringert bzw. der Ertrag erhöht werden.

Tabelle 11

Kultur: Sommerweizen (Sorte: Ralle)
Bodenart: Ton
Saat: 20.03.89
Behandlung: 19,05.89
Auswertung: Pflanzenschäden 02.06.89
Wuchshöhe 13.06.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 80,6 | |
| B | 690 | 0 | 66,0 | - 14,6 |
| E | 10 | 0 | 82,0 | + 1,4 |
| B + E | 690 + 5 | 0 | 60,0 | - 20,6 |
| B + E | 690 + 10 | 0 | 57,0 | - 23,6 |
| B + E | 690 + 20 | 5 | 54,0 | - 26,6 |

Tabelle 12

Kultur: Winterweizen (Sorte: Kanzler)
Bodenart: Ton
Saat: 04.10.89
Behandlung: 05.04.90
Auswertung: Pflanzenschäden 05.06.90
Wuchshöhe 05.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 122,9 | |
| B | 690 | 0 | 117,2 | - 5,7 |
| E | 5 | 0 | 122,8 | - 0,1 |
| B + E | 690 + 1,25 | 0 | 113,2 | - 9,7 |
| B + E | 690 + 2,5 | 0 | 114,8 | - 8,1 |
| B + E | 690 + 5 | 0 | 113,4 | - 9,5 |

Tabelle 13

Kultur: Winterweizen (Sorte: Kraka)
Bodenart: lehmiger Sand
Saat: 07.11.89
Behandlung: 02.05.90
Auswertung: Pflanzenschäden 05.06.90
Wuchshöhe 05.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 97,9 | |
| B | 690 | 0 | 88,7 | - 9,2 |
| E | 5 | 0 | 99,1 | + 1,2 |
| B + E | 690 + 2,5 | 0 | 86,0 | - 11,9 |
| B + E | 690 + 5 | 0 | 85,4 | - 12,5 |

Tabelle 14

Kultur: Hafer (Sorte: Flämingsnova)
Bodenart: sandiger Lehm
Saat: 08.03.90
Behandlung: 13.05.90
Auswertung: Pflanzenschäden 08.06.90
Wuchshöhe 08.06.90

| Substanz | g/ha Wirkstoff | Pflanzenschäden % | Wuchshöhe cm | Differenz zu Kontrolle (cm) |
|---|---|---|---|---|
| Kontrolle | 0 | 0 | 97,5 | |
| B | 690 | 0 | 91,9 | - 5,6 |
| E | 5 | 0 | 95,8 | - 1,7 |
| B + E | 690 + 5 | 0 | 89,1 | - 8,4 |

Tabelle 15

Kultur: Sommergerste (Sorte: Gimpel)
Bodenart: Ton
Saat: 20.03.89
Behandlung: 18.05.89
Auswertung: Pflanzenschäden 02.06.89
Wuchshöhe 12.06.89
Lager 24.07.89

| Substanz | g/ha Wirkstoff | Pflanzen-schäden % | Wuchshöhe/ Differenz zu Kontrolle [cm] | | Lager/ Differenz zu Kontrolle [%] | |
|---|---|---|---|---|---|---|
| Kontrolle | 0 | 0 | 95,4 | | 38 | |
| B | 690 | 0 | 94,4 | - 1,0 | 49 | + 11 |
| E | 10 | 0 | 93,1 | - 2,3 | 42 | + 4 |
| B + E | 690 + 10 | 0 | 91,6 | - 3,8 | 36 | - 2 |
| B + E | 690 + 20 | 6 | 67,5 | - 27,9 | 0 | - 38 |

Tabelle 16

Kultur: Baumwolle (Sorte: SJ - 2)
Bodenart: sandiger Lehm
Saat: 24.02.89
Behandlung: 27.06.89
Auswertung: Pflanzenschäden 06.07.89
Wuchshöhe 05.10.89

| Substanz | g/ha Wirkstoff | Pflanzenschäden % | Wuchshöhe cm | Differenz zu Kontrolle (cm) |
|---|---|---|---|---|
| Kontrolle | 0 | 0 | 125,0 | |
| B | 30 | 0 | 116,2 | - 8,8 |
| E | 10 | 2 | 130,0 | + 5,0 |
| B + E | 30 + 5 | 0 | 111,2 | - 13,8 |
| B + E | 30 + 10 | 2 | 111,2 | - 13,8 |

Tabelle 17

Kultur: Baumwolle (Sorte: GC - 510)
Bodenart: Lehm
Saat: 28.02.89
Behandlung: 27.06.89
Auswertung: Pflanzenschäden 06.06.90
Ertrag Saatbaumwolle 06.06.90

| Substanz | g/ha Wirkstoff | Pflanzenschäden % | Ertrag Saatbaumwolle kg/ha | Differenz zu Kontrolle (kg/ha) |
|---|---|---|---|---|
| Kontrolle | 0 | 0 | 3233 | |
| B | 30 | 0 | 3375 | + 142 |
| E | 10 | 1 | 2857 | - 376 |
| B + E | 30 + 5 | 0 | 3453 | + 220 |
| B + E | 30 + 10 | 4 | 4003 | + 770 |
| B + E | 30 + 20 | 3 | 2693 | - 540 |

## Patentansprüche

1. Mittel zur Regulierung des Pflanzenwachstums, enthaltend eine synergistische Mischung aus mindestens einem wachstumsregulatorisch wirksamen quarternären Ammoniumsalz aus der Gruppe der Verbindungen I, umfassend: N,N-Dimethyl-azacycloheptaniumsalze, N,N-Dimethyl-piperidiniumsalze, N,N-Dimethyl-tetrahydropyridaziniumsalze,
N-Methyl-pyridiniumsalze und N,N-Dimethyl-pyrrolidiniumsalze und einem Imidazolinylderivat der allgemeinen Formel II

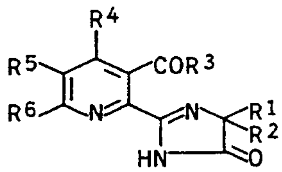

II

in der die Substituenten folgende Bedeutung haben:

$R^1$

$C_1$-$C_4$-Alkyl;

$R^2$

$C_1$-$C_4$-Alkyl oder $C_3$-$C_6$-Cycloalkyl;

$R^3$

Wasserstoff; Hydroxyl; $C_1$-$C_{12}$-Alkyl; $C_1$-$C_{12}$-Alkoxy; $C_1$-$C_{12}$-Alkylamino; Di-$C_1$-$C_{12}$-alkylamino; Phenyl, Phenoxy oder Phenylamino, wobei die aromatischen Reste ein bis fünf Halogenatome und/oder ein bis drei der folgenden Gruppen tragen können: $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

$R^4$

Wasserstoff; Halogen; $C_1$-$C_4$-Alkyl; $C_1$-$C_4$-Halogenalkyl; $C_1$-$C_4$-Alkoxy; $C_1$-$C_4$-Halogenalkoxy; $C_1$-$C_4$-Alkylthio oder $C_1$-$C_4$-Halogenalkylthio;

$R^5$ und $R^6$ unabhängig voneinander

eine der bei $R^4$ genannten Gruppen oder gemeinsam eine 1,3-Butadien-1,4-diylgruppe, welche ein bis vier Halogenatome und/oder ein bis drei der folgenden Gruppen tragen kann: $C_1$-$C_4$-Aklyl, $C_1$-$C_4$-Halogenalkyl, $C_1$-$C_4$-Alkoxy, $C_1$-$C_4$-Halogenalkoxy, $C_1$-$C_4$-Alkylthio und C1-C4-Halogenalkylthio;

sowie inerte Zusatzstoffe.

**2.** Mittel zur Regulierung des Pflanzenwachstums nach Anspruch 1, enthaltend mindestens ein N,N-Dimethyl-piperidiniumsalz (I).

**3.** Mittel zur Regulierung des Pflanzenwachstums nach Anspruch 1, enthaltend ein Imidazolinylderivat der allgemeinen Formel II gemäß Anspruch 1, in der $R^1$, $R^2$, $R^4$, $R^5$ und $R^6$ die in Anspruch 1 gegebene Bedeutung haben und

$R^3$ für

Wasserstoff; Hydroxyl; $C_1$-$C_8$-Alkyl; $C_1$-$C_8$-Alkoxy; $C_1$-$C_8$-Alkylamino; Di-$C_1$-$C_8$-alkylamino; Phenyl, Phenoxy oder Phenylamino, wobei die aromatischen Reste ein bis fünf Halogenatome und/oder ein bis drei der folgenden Gruppen tragen können: $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

steht, sowie inerte Zusatzstoffe.

**4.** Mittel zur Regulierung des Pflanzenwachstums nach Anspruch 1, enthaltend mindestens ein N,N-Dimethyl-piperidiniumsalz (I)

und ein Imidazolinylderivat der allgemeinen Formel II gemäß Anspruch 1, in der $R^1$ und $R^2$ die in Anspruch 1 gegebene Bedeutung haben und

$R^3$ für

Wasserstoff; Hydroxyl; $C_1$-$C_8$-Alkyl; $C_1$-$C_8$-Alkoxy; $C_1$-$C_8$-Alkylamino;

Di-$C_1$-$C_8$-alkylamino;

Phenyl, Phenoxy oder Phenylamino, wobei die aromatischen Reste ein bis fünf Halogenatome und/oder ein bis drei der folgenden Gruppen tragen können: $C_1$-$C_4$-Aklyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

$R^4$ für

Wasserstoff oder Halogen und

$R^5$ und $R^6$ unabhängig voneinander für

Wasserstoff; Halogen; $C_1$-$C_4$-Alkyl; $C_1$-$C_4$-Halogenalkyl; $C_1$-$C_4$-Alkoxy; $C_1$-$C_4$-Halogenalkoxy; $C_1$-$C_4$-Alkylthio; $C_1$-$C_4$-Halogenalkylthio;

oder gemeinsam eine 1,3-Butadien-1,4-diylgruppe, welche ein bis vier Halogenatome und/oder eine der folgenden Gruppen tragen kann: $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio;

stehen, sowie inerte Zusatzstoffe.

5. Mittel nach Anspruch 4 enthaltend eine synergistische Mischung aus N,N-Dimethylpiperidiniumchlorid, N,N,N-Trimethyl-N-2-chlorethylammoniumchlorid und 5-Ethyl-2-(4-isopropyl-4-methyl-5-oxo-2-imidazolin-2-yl)-3-nicotincarbonsäure.

6. Mittel zur Regulierung des Pflanzenwachstums nach Anspruch 1, enthaltend eine synergistische Mischung aus N,N-Dimethyl-piperidiniumchlorid und 2-(4-Isopropyl-4-methyl-5-oxo-2-imidazolin-2-yl)-3-chinolincarbonsäure sowie inerte Zusatzstoffe.

7. Mittel zur Regulierung des Pflanzenwachstums nach Anspruch 1, enthaltend eine synergistische Mischung aus N,N-Dimethyl-piperidiniumchlorid und 2-(4-Isopropyl-4-methyl-5-oxo-2-imidazolin-2-yl)-3-nicotincarbonsäure-isopropylaminsalz sowie inerte Zusatzstoffe.

8. Mittel zur Regulierung des Pflanzenwachstums nach Anspruch 1, enthaltend eine synergistische Mischung aus N,N-Dimethyl-piperidiniumchlorid und 5-Ethyl-2-(4-isopropyl-4-methyl-5-oxo-2-imidazolin-2-yl)-3-nicotincarbonsäure sowie inerte Zusatzstoffe.

9. Mittel nach den Ansprüchen 1 bis 8, dadurch gekennzeichnet, daß das Anteilsverhältnis von Ammoniumsalz I zu Imidazolinderivat II 0,1:1 bis 1000:1 Gew.-Teile beträgt.

10. Verfahren zu Regulierung des Pflanzenwachstums, dadurch gekennzeichnet, daß man die Pflanzen, ihren Lebensraum und/oder ihre Samen mit einer regulativ wirksamen Menge einer synergistischen Mischung gemäß den Ansprüchen 1 bis 9 behandelt.

11. Verfahren gemäß Anspruch 10, dadurch gekennzeichnet, daß die Pflanzen Getreide oder Baumwolle sind.

## Claims

1. A plant growth regulator containing a synergistic mixture of one or more growth-regulating quaternary ammonium salts from the group consisting of the compounds I, comprising N,N-dimethylazacycloheptanium salts, N,N-dimethylpiperidinium salts, N,N-dimethyltetrahydropyridazinium salts, N-methylpyridinium salts and N,N-dimethylpyrrolidinium salts, and an imidazolinyl derivative of the general formula II

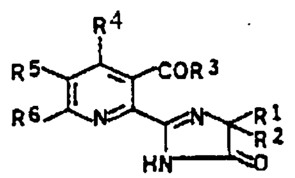

II

where $R^1$ is $C_1$-$C_4$-alkyl, $R^2$ is $C_1$-$C_4$-alkyl or $C_3$-$C_6$-cycloalkyl, $R^3$ is hydrogen, hydroxyl, $C_1$-$C_{12}$-alkyl, $C_1$-$C_{12}$-alkoxy, $C_1$-$C_{12}$-alkylamino, di-$C_1$-$C_{12}$-alkylamino or is phenyl, phenoxy or phenylamino, where the aromatic radicals may carry from one to five halogen atoms and/or from one to three of the following groups: $C_1$-$C_4$-alkyl,$C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, $R^4$ is hydrogen, halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio and $R^5$ and $R^6$ independently of one another are each one of the groups stated for $R^4$ or together form a 1,3-butadiene-1,4-diyl group which may carry from one to four halogen atoms and/or from one to three of the following groups: $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, and inert additives.

2. A plant growth regulator as claimed in claim 1, containing one or more N,N-dimethylpiperidinium salts (I).

3. A plant growth regulator as claimed in claim 1, containing an imidazolinyl derivative of the general formula II as claimed in claim 1, where $R^1$, $R^2$, $R^4$, $R^5$ and $R^6$ have the meanings stated in claim 1 and $R^3$ is hydrogen, hydroxyl, $C_1$-$C_8$-alkyl, $C_1$-$C_8$-alkoxy, $C_1$-$C_8$-alkylamino or di-$C_1$-$C_8$-alkylamino or is phenyl, phenoxy or phenylamino, where the aromatic radicals may carry from one to five halogen atoms and/or from one to three of the following groups: $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, and inert additives.

4. A plant growth regulator as claimed in claim 1, containing one or more N,N-dimethylpiperidinium salts (I) and an imidazolinyl derivative of the general formula II as claimed in claim 1, where $R^1$ and $R^2$ have the meanings stated in claim 1 and $R^3$ is hydrogen, hydroxyl, $C_1$-$C_8$-alkyl, $C_1$-$C_8$-alkoxy, $C_1$-$C_8$-alkylamino or di-$C_1$-$C_8$-alkylamino or is phenyl, phenoxy or phenylamino, where the aromatic radicals may carry from one to five halogen atoms and/or from one to three of the following groups: $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, $R^4$ is hydrogen or halogen and $R^5$ and $R^6$ independently of one another are each hydrogen, halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, or together form a 1,3-butadiene-1,4-diyl group which may carry from one to four halogen atoms and/or one of the following groups: $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio or $C_1$-$C_4$-haloalkylthio, and inert additives.

5. An agent as claimed in claim 4, containing a synergistic mixture of N,N-dimethylpiperidinium chloride, N,N,N-trimethyl-N-2-chloroethylammoniw chloride and 5-ethyl-2-(4-isopropyl-4-methyl-5-oxo-2-imidazolin-2-yl)-3-nicotinecarboxylic acid.

6. A plant growth regulator as claimed in claim 1, containing a synergistic mixture of N,N-dimethylpiperidinium chloride and 2-(4-isopropyl-4-methyl-5-oxo-2-imidazolin-2-yl)-3-quinolinecarboxylic acid and inert additives.

7. A plant growth regulator as claimed in claim 1, containing a synergistic mixture of N,N-dimethylpiperidinium chloride and isopropylammonium 2-(4-isopropyl-4-methyl-5-oxo-2-imidazolin-2-yl)-3-nicotinecarboxylate and inert additives.

8. A plant growth regulator as claimed in claim 1, containing a synergistic mixture of N,N-dimethylpiperidinium chloride and 5-ethyl-2-(4-isopropyl-4-methyl-5-oxo-2-imidazolin-2-yl)-3-nicotinecarboxylic acid and inert additives.

9. An agent as claimed in claim 1 or 2 or 3 or 4 or 5 or 6 or 7 or 8, wherein the weight ratio of ammonium salt I to imidazoline derivative II is from 0.1 : 1 to 1000 : 1.

10. A method for regulating plant growth, wherein the plants, their habitat and/or their seeds is or are treated with an amount, having a regulating effect, of a synergistic mixture as claimed in claim 1 or 2 or 3 or 4 or 5 or 6 or 7 or 8 or 9.

11. A method as claimed in claim 10, wherein the plants are cereals or cotton.

## Revendications

1. Agent pour la régulation de la croissance des plantes, contenant un mélange synergique constitué d'au moins un sel d'ammonium quaternaire régulant la croissance végétale, appartenant au groupe des composés I, comprenant : le sel de N,N-diméthyl-azacycloheptanium, le sel de N,N-diméthyl-pipéridinium, le sel de N,N-diméthyl-tétrahydropyndazinium, le sel de N-méthylpyridinium et le sel de N,N-diméthyl-pyrrolidinium, et un dérivé d'imidazolinyle de formule générale II

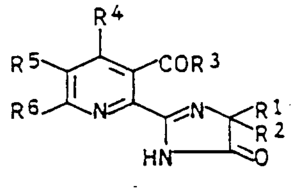

II

dans laquelle les substituants représentent :

$R^1$ un groupe alkyle en $C_1$-$C_4$;

$R^2$ un groupe alkyle en $C_1$-$C_4$ ou cycloalkyle en $C_3$-$C_6$;

$R^3$ un atome d'hydrogène ; un groupe hydroxyle ; un groupe alkyle en $C_1$-$C_{12}$; un groupe alcoxy en $C_1$-$C_{12}$; un groupe alkylamino en $C_1$-$C_{12}$; un groupe dialkylamino en $C_1$-$C_{12}$; un groupe phényle, phénoxy ou phénylamino, les restes aromatiques pouvant porter un à cinq atomes d'halogène et/ou un à trois des groupes suivants : alkyle en $C_1$-$C_4$, halogénoalkyle en $C_1$-$C_4$, alcoxy en $C_1$-$C_4$, halogénoalcoxy en $C_1$ -$C_4$, alkylthio en $C_1$ -$C_4$ et halogénoalkylthio en $C_1$-$C_4$;

$R^4$ un atome d'hydrogène ; un atome d'halogène ; un groupe alkyle en $C_1$-$C_4$ ; halogénoalkyle en $C_1$-$C_4$ ; alcoxy en $C_1$-$C_4$ ; halogénoalcoxy en $C_1$-$C_4$ ; alkylthio en $C_1$-$C_4$ ou halogénoalkylthio en $C_1$-$C_4$;

$R^5$ et $R^6$ , indépendamment l'un de l'autre, un des groupes mentionnés pour $R^4$ ou conjointement, un groupe 1,3-butadiène-1,4-diyle, qui peut porter un à quatre atomes d'halogène et/ou un à trois des groupes suivants : alkyle en $C_1$-$C_4$, halogénoalkyle en $C_1$-$C_4$, alcoxy en $C_1$-$C_4$, halogénoalcoxy en $C_1$-$C_4$, alkylthio en $C_1$-$C_4$ et halogénoalkylthio en $C_1$-$C_4$;

ainsi que des adjuvants inertes.

**2.** Agent pour la régulation de la croissance des plantes, selon la revendication 1, contenant au moins un sel de N,N-diméthyl-pipéridinium (I).

**3.** Agent pour la régulation de la croissance des plantes, selon la revendication 1, contenant un dérivé d'imidazolinyle de formule générale II, selon la revendication 1, dans lequel $R^1$, $R^2$, $R^4$, $R^5$ et $R^6$ ont les significations données dans la revendication 1, et

$R^3$ représente un atome d'hydrogène ; un groupe hydroxyle ; un groupe alkyle en $C_1$-$C_8$ ; un groupe alcoxy en $C_1$-$C_8$ ; un groupe alkylamino en $C_1$-$C_8$ ; un groupe dialkylamino en $C_1$-$C_8$ ;
un groupe phényle, phénoxy ou phénylamino, les restes aromatiques pouvant porter un à cinq atomes d'halogène et/ou un à trois des groupes suivants : alkyle en $C_1$-$C_4$, halogénoalkyle en $C_1$-$C_4$, alcoxy en $C_1$-$C_4$, halogénoalcoxy en $C_1$-$C_4$, alkylthio en $C_1$-$C_4$ et halogénoalkylthio en $C_1$-$C_4$;

ainsi que des adjuvants inertes.

**4.** Agent pour la régulation de la croissance des plantes, selon la revendication 1, contenant au moins un sel de N,N-diméthyl-pipéridinium (I) et un dérivé d'imidazolinyle de formule générale II, selon la revendication 1, dans lequel $R^1$ et $R^2$ ont les significations données dans la revendication 1, et

$R^3$ représente un atome d'hydrogène ; un groupe hydroxyle ; un groupe alkyle en $C_1$-$C_8$; un groupe alcoxy en $C_1$-$C_8$ ; un groupe alkylamino en $C_1$-$C_8$ ; un groupe dialkylamino en $C_1$-$C_8$ ;
un groupe phényle, phénoxy ou phénylamino, les restes aromatiques pouvant porter un à cinq atomes d'halogène et/ou un à trois des groupes suivants : alkyle en $C_1$-$C_4$, halogénoalkyle en $C_1$-$C_4$, alcoxy en $C_1$-$C_4$, halogénoalcoxy en $C_1$-$C_4$, alkylthio en $C_1$-$C_4$ et halogénoalkylthio en $C_1$-$C_4$;

$R^4$ représente un atome d'hydrogène ou d'halogène ; et

$R^5$ et $R^6$ représentent, indépendamment l'un de l'autre, un atome d'hydrogène ; un atome d'halogène ; un groupe alkyle en $C_1$-$C_4$; halogénoalkyle en $C_1$-$C_4$; alcoxy en $C_1$-$C_4$; halogénoalcoxy en $C_1$-$C_4$;alkylthio en $C_1$-$C_4$ ou halogénoalkylthio en $C_1$-$C_4$;
ou conjointement, un groupe 1,3-butadiène-1,4-diyle, qui peut porter un à quatre

atomes d'halogène et/ou un à trois des groupes suivants : alkyle en $C_1$-$C_4$, halogénoalkyle en $C_1$-$C_4$, alcoxy en $C_1$-$C_4$, halogénoalcoxy en $C_1$-$C_4$, alkylthio en $C_1$-$C_4$ et halogénoalkylthio en $C_1$-$C_4$;

ainsi que des adjuvants inertes.

**5.** Agent selon la revendication 4, contenant un mélange synergique constitué par le chlorure de N,N-diméthylpipéridinium, le chlorure de N,N,N-triméthyl-N-2-chloroéthylammonium et l'acide 5-éthyl-2-(4-isopropyl-4-méthyl-5-oxo-2-imidazoline-2-yl)-3-nicotinique.

**6.** Agent pour la régulation de la croissance des plantes, selon la revendication 1, contenant un mélange synergique constitué par le chlorure de N,N-diméthylpipéridinium et l'acide 2-(4-isopropyl-4-méthyl-5-oxo-2-imidazoline-2-yl)-3-quinoléique, ainsi que des adjuvants inertes.

**7.** Agent pour la régulation de la croissance des plantes, selon la revendication 1, contenant un mélange synergique constitué par le chlorure de N,N-diméthylpipéridinium et l'acide 2-(4-isopropyl-4-méthyl-5-oxo-2-imidazoline-2-yl)-3-nicotinique, ainsi que des adjuvants inertes.

**8.** Agent pour la régulation de la croissance des plantes, selon la revendication 1, contenant un mélange synergique constitué par le chlorure de N,N-diméthylpipéridinium et l'acide 5-éthyl-2-(4-isopropyl-4-méthyl-5-oxo-2-imidazoline-2-yl)-3-nicotinique, ainsi que des adjuvants inertes.

**9.** Agent selon les revendications 1 à 8, caractérisé en ce que le rapport du sel d'ammonium I au dérivé d'imidazoline II est de 0,1 : 1 à 1000 : 1 parties en poids.

**10.** Procédé de régulation de la croissance des plantes, caractérisé par le fait que l'on traite les plantes, leur biotope et/ou leurs semences avec une quantité à effet régulateur d'un mélange synergétique selon les revendications 1 à 9.

**11.** Procédé selon la revendication 10, caractérisé par que le fait que les plantes sont des céréales ou du coton.